# EUROPEAN PATENT SPECIFICATION

(11) **EP 1 404 764 B1**
(45) Date of publication and mention of the grant of the patent: **28.09.2005**
(21) Application number: 02784831.6
(22) Date of filing: 03.07.2002
(51) Int. Cl.: C09C 1/00

(54) **PHOTOSTABLE RUTILE TITANIUM DIOXIDE**
PHOTOSTABILES TITANDIOXID DER MODIFIKATION RUTIL
DIOXYDE DE TITANE DE RUTILE PHOTOSTABLE

(30) Priority: 07.07.2001 DE 10133114
(43) Date of publication of application: 07.04.2004
(73) Proprietor: KRONOS TITAN GmbH, 51373 Leverkusen (DE)
(72) Inventor: DREWS-NICOLAI, Lydia, 51067 Köln (DE)
(86) International application number: PCT/EP2002/007317
(87) International publication number: WO 2003/006559

(56) References cited:
- EP-A- 0 779 243
- GB-A- 553 135
- GB-A- 990 419
- US-A- 3 862 297

## Description

The invention relates to a rutile titanium dioxide base material with high photostability, produced by the sulphate process, a method for its manufacture and the manufacture of a rutile titanium dioxide pigment with high photostability.

When using TiO₂ as a white pigment in paints and coatings, fibres or plastics and the like, it is well known that undesirable photocatalytic reactions induced by UV absorption lead to degradation of the pigmented material (H. G. Völz, G. Kaempf, H. G. Fitzky, A. Kaeren, ACS Symp. Ser. 1981, 151 (Photodegradation Photostab. Coat.)).

In this context, TiO₂ pigments, like the binders themselves, absorb light in the near ultraviolet range, thus producing electron-hole pairs which, via redox reactions, lead to the formation of highly reactive radicals on the TiO₂ surface. The generated radicals result in binder degradation in organic media. The anatase modification of TiO₂ is photocatalytically more active than the rutile modification of TiO₂. Consequently, rutile pigments are used when highly stable pigments are required.

It is also known that the photoactivity of TiO₂ can be reduced by means of inorganic post-treatment of the TiO₂ particles (for example with oxides of Si, Al and/or Zr). It is further known that, in order to reduce photoactivity, certain substances (such as Al) can be added during the manufacture of the pigments, which cause doping of the titanium dioxide pigment, this having the effect of increasing the stability (Industrial Inorganic Pigments, ed. by G. Buxbaum, VCH, New York 1993, pp. 43 to 71).

Pigment particles stabilised in this manner continue to absorb UV light and provide UV protection for the materials pigmented with them. The formation of highly reactive radicals is restricted by the doping of the TiO₂.

When manufacturing a base material made of titanium dioxide by the sulphate process, ilmenite or titanium dioxide containing slag is reacted with concentrated sulphuric acid. The resultant sulphuric acid Ti(IV) solution is stripped of contaminants and titanium oxyhydrate is precipitated. The precipitate is converted into the fine-particle-size oxide by subsequent calcination in a rotary kiln. Calcination takes place at temperatures in the region of 1,000 °C. Calcination to the required particle size produces the thermodynamically less stable anatase modification. Only at very high temperatures does conversion into rutile take place. However, this process leads to the formation of TiO₂ particles with an unfavourable particle size distribution that entails substantial deterioration of the optical properties. A known method of avoiding this is to add rutilisation nuclei prior to calcination, these permitting a lower calcination temperature and production of rutile pigments with good optical properties. So-called calcining additives and/or rutilisation nuclei make it possible to raise or, preferably, lower the temperature at which anatase-rutile conversion occurs. Other properties of the pigment also change in this process: alkali metals and phosphate generally increase crystal growth, while aluminium additives improve stability and simultaneously raise the temperature at which anatase is converted into rutile.

The use of Al as a stability-increasing calcining additive is well known. The addition of Al during calcining leads to doping of the base material from the sulphate process (SP), this having the effect of increasing stability (G. Buxbaum, loc. cit.). However, the use of Al as a stability-increasing calcining additive also increases the calcining temperature required for anatase-rutile conversion. The elevated calcining temperature brings about substantial deterioration in the optical properties (relative scattering power, brightness, white and grey tone).
The use of Li as a rutilisation-promoting calcining additive is also known (GB-A-553 135; GB-B-553 136; US-A-2,307,048). Moreover, application of the calcining additive Al in combination with rutilisation-inhibiting additives, such as K and P, is also known in the literature (GB-A-990 419). GB 1 335 184 describes the use of one or more compounds from two groups of calcining additives, from the group of alkali metals, on the one hand, and from the group of Be, Mg, Al and Zn, on the other. The manufacture of titanium dioxide pigment by this method leads to products with improved optical properties; no reference is made to the development of photostability.

When manufacturing TiO₂ by the sulphate process, it has so far not been possible to obtain a pigment with high photostability and good optical properties at the same time.

The object of the invention is to manufacture a titanium dioxide pigment with high photostability and the best possible optical properties.

The objective is achieved by using the highly rutilisation-promoting calcining additive Li in the presence of the stability-increasing, but rutilisation-inhibiting calcining additive Al.

The subject of the invention in a first embodiment is a rutile titanium dioxide base material characterised by a lithium content of 0.05 to 0.5% by weight (calculated as Li₂O referred to TiO₂) and an aluminium content of 0.1 to 0.8% by weight, preferably 0.4 to 0.8% by weight (calculated as Al₂O₃ referred to TiO₂).

With the help of the present invention, the use of highly rutilisation-promoting Li together with the stability-increasing calcining additive Al yields a photostable titanium dioxide base material or a titanium dioxide pigment characterised by improved optical properties (relative scattering power, brightness, white and grey tone).

The photostability is generally characterised by the white lead-glycerine test (PbG₃ Test). In this context, the grey discoloration occurring in an originally white paste as a result of photoreaction is monitored by means of reflectance measurements (ΔY) as a function of time. The extension of the time taken to reach a defined grey level characterises the increase in the photostability of the titanium dioxide base material or pigment.

It was not known previously that, in addition to the use of rutilisation nuclei in the sulphate process, the addition of lithium and aluminium to the titanium oxyhydrate suspension or paste prior to calcination improves both the photostability and the optical properties of the pigment. For example, GB-A-990 419 mentions that an SP pigment with aluminium, potassium (and phosphate) and rutilisation nuclei has to be calcined at over 1,000 °C.

Surprisingly, it has now been found that, given sufficient doping of the titanium dioxide base material with lithium, the naturally rutilisation-inhibiting aluminium calcining additive is tolerable, the calcining temperature reduced and increased stability achievable.

The added quantity of Al₂O₃ is particularly preferably 0.5 to 0.8% by weight referred to TiO₂. In another advantageous embodiment, the added quantity of Li₂O is 0.1 to 0.3% by weight referred to TiO₂. Li and Al, for example, can be added to the titanium sulphate solution in the form of Al₂(SO₄)₃ solution and as LiOH solution. The titanium dioxide base material according to the invention has a photostability, measured as the PbG₃ value, of at least 5. The relative scattering power, measured as the MAB HTS value, is at least 80, particularly at least 95. The grey tone, measured as the MAB HSC value, is at least 3. The brightness, measured as the DFC L* value, is at least 96.4 and the white tone, measured as the DFC b* value, is up to 2.5. Preferably, neither a potassium compound nor a sodium compound is added to the base materials according to the invention. In particular, the use of other treatment agents from the group of beryllium, magnesium, zinc, rubidium, caesium or compounds of these metals, is not necessary.

In terms of method, the objective is achieved in such a way, that during or after hydrolysis of the clarified titanium sulphate solution in the sulphate process, and after addition of rutilisation nuclei prior to calcination of the titanium oxyhydrate suspension or paste, not only 0.05 to 0.5% by weight of a lithium compound (calculated at Li₂O referred to TiO₂) is added, but also 0.1 to 0.8% by weight of an aluminium compound (calculated as Al₂O₃ referred to TiO₂).
The titanium oxyhydrate suspension normally has an acidic pH value of roughly 2 to 3. However, the method can also be performed using a titanium oxyhydrate suspension whose pH value has previously been adjusted to a value of up to 10. Ammonium hydroxide solution can, for example, be used as the neutralising agent.

Inorganic treatment that is known in itself can be used to produce rutile pigments with high photostability and good optical properties from this base material. The invention also encompasses rutile base materials and rutile pigments with high photostability and good optical properties.

Pigments are rarely present in just one modification in practice. Even at an anatase content of 5% by weight, reference is still made to a "rutile pigment". Base materials and/or titanium dioxide pigments according to the invention preferably have an anatase content of less than 3% by weight, most particularly preferably an anatase content of less than 2% by weight.

Post-treatment processes that are well-known in themselves transform TiO₂ base material into TiO₂ pigment grades optimised for application. The base materials manufactured by the method according to the invention are eminently suitable for photostable pigments with good optical properties. Even if the titanium dioxide base materials manufactured according to the invention are subjected to washing prior to post-treatment and the lithium content is possibly greatly reduced as a result, the products of the methods are still characterised by substantially better optical and stability values than pigments manufactured from base materials doped with little or no Li and Al.

The titanium dioxide base materials according to the invention were also examined under the transmission electron microscope in comparison with potassium and aluminium-doped samples. It was found that the titanium dioxide base materials treated with potassium and aluminium calcining additives largely consist of rod-shaped titanium dioxide crystals with a length-to-width ratio of roughly 5 : 1. In contrast, the titanium dioxide treated with Li and Al calcining additives according to the invention displays a greater proportion of short, rounded crystals with a length-to-width ratio of roughly 2 : 1.

### Examples:

The invention is described in more detail below on the basis of examples.

The test results obtained on photostable pigments with improved optical properties according to the invention and on reference samples of pigments produced using known calcining additives, such as potassium and aluminium, are compiled in the Table.

Photostability is characterised by means of the white lead-glycerine test (PbG₃ Test). Comparable tests are described in the state of the art, for example in R.L. Gerteis and A.C. Elm, J. Paint Technol., 43 (1971) 99-106 and in US 3,981,737. The testing procedure specifies preparation of an aqueous paste comprising the TiO₂ pigment to be investigated, glycerine and basic lead carbonate (mass ratio 1 : 2,27 : 0,09, resp.). Subsequently, the paste is irradiated with UV light. The grey discoloration of the paste induced by photoreaction is monitored by means of reflectance measurements as a function of time and is a measure of the photostability of the pigment. As a result the time until a predetermined grey discoloration value (ΔY = 30) is reached is indicated in minutes. An increase in the measured value corresponds to an improvement in the photostability of the TiO₂ pigment. The measured values are adjusted in relation to internal standards tested in the same run.

The optical properties indicated are the relative scattering power, grey tone, brightness and white tone.
The relative scattering power (HTS Hunterlab Tinctorial Strength) and the grey tone (HSC Hunterlab Spectral Characteristics) are measured using the modified Alkyd Black Test (MAB) to DIN 53 165. To this end, the titanium dioxide pigment to be tested is made into a paste with a ready-made, solvent-free black paste on an automatic muller. The resultant grey paste is applied to a card with a film applicator and the reflectance values are determined in wet condition using a Hunterlab colorimeter.
The Dry Film Color (DFC) test to DIN 55 983 is used to measure the brightness (DFC L*) and white tone (DFC b*). The titanium dioxide pigment to be tested is made into a paste in an alkyd paint on an automatic muller and the reflectance values of the dried paint brush-out are determined using a Hunterlab colorimeter.

### Reference example 1: Undoped (calcining additive: 0.22% by weight K₂O)

An aqueous KOH calcining additive solution, calculated as 0.22% by weight K₂O (referred to TiO₂), was added to the aqueous suspension of a titanium oxyhydrate with rutilisation nuclei while stirring constantly. After drying the hydrate, it was calcined for roughly 2 h at approximately 880 °C. After cooling, the product was ground in a mortar mill (Pulverisette) (10 g, 10 min).
The resultant, non-Al-doped product was a rutile pigment with good optical properties (e.g. relative scattering power, grey tone, brightness and white tone). The pigment did not display high photostability.

### Reference example 2: Doped (calcining additives: 0.22% by weight K₂O/0.6% by weight Al₂O₃)

The procedure was as described in Reference example 1, except that, in addition to the K₂O calcining additive, an aqueous Al₂(SO₄)₃ calcining additive solution, calculated as 0.6% by weight Al₂O₃ (referred to TiO₂), was also added. The calcining temperature was roughly 1,005 °C. The anatase content of the product obtained was roughly 1.1%.
The resultant Al-doped pigment displayed high stability but, in comparison with Reference example 1, a dramatic decline in optical properties (relative scattering power, grey tone, brightness, white tone).

### Example 1: Doped (calcining additives: 0.22% by weight Li₂O/0.6% by weight Al₂O₃)

The procedure was as described in Reference example 2, except that the KOH calcining additive solution was replaced by an LiOH calcining additive solution, calculated as 0.22% by weight Li₂O. The calcining temperature was lowered by the Li₂O calcining additive and was in the region of 885 °C. The anatase content of the product obtained was roughly 1.3%.
The resultant product displayed high photostability and the optical properties (relative scattering power, grey tone, brightness, white tone) were substantially improved compared to Reference example 2 (reference pigment).

### Example 2: Doped (calcining additives: 0.22% by weight Li₂O/0.6% by weight Al₂O₃)

The procedure corresponded to that in Example 1, except that the calcining temperature was in the region of 877 °C. The anatase content of the product obtained was roughly 2%.
The resultant product displayed high photostability and the optical properties were improved compared to Reference examples 1 and 2.

### Example 3 : Doped (calcining additives: 0.22% by weight Li₂O/0.5% by weight Al₂O₃)

The procedure corresponded to that in Example 1, except that the amount of Al₂O₃ additive was reduced from 0.6% by weight to 0.5% by weight. The calcining temperature was in the region of 880 °C. The anatase content of the product obtained was roughly 1.4%.
The resultant product displayed high photostability and the optical properties were improved compared to Example 1.

### Example 4: Doped (calcining additives: 0.29% by weight Li₂O/0.4% by weight Al₂O₃)

The procedure corresponded to that in Example 3, except that the calculated amounts of calcining additives were 0.29% by weight Li₂O and 0.4% by weight Al₂O₃. The calcining temperature was in the region of 874 °C. The anatase content of the product obtained was roughly 1.2%.
The resultant product displayed high photostability and the optical properties were improved compared to Example 3.

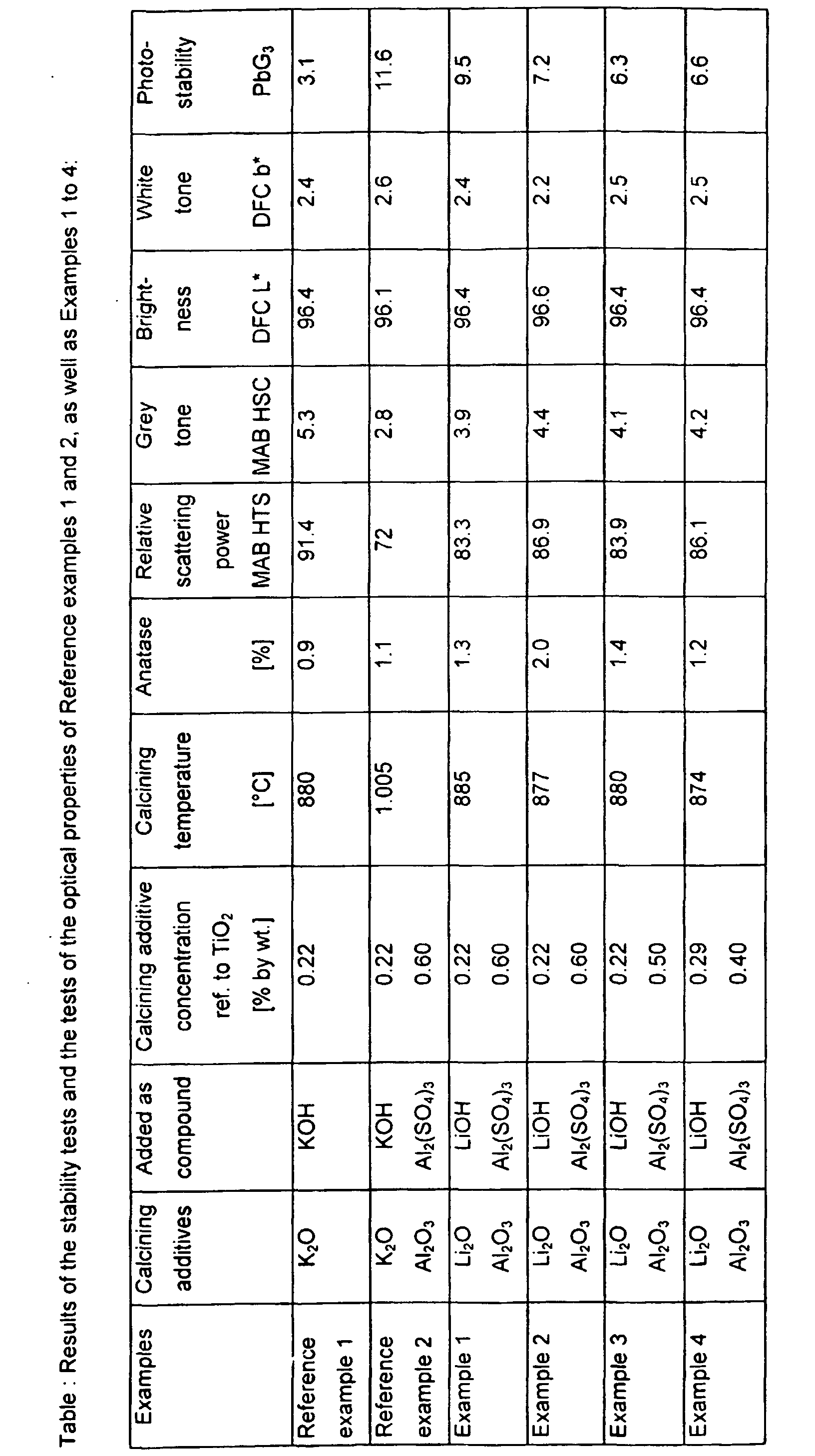

## Claims

1. Rutile titanium dioxide base material, **characterised by** a lithium content of 0.05% to 0.5% by weight (calculated as Li₂O referred to TiO₂) and an aluminium content of more than 0.15 to 0.8% by weight (calculated as Al₂O₃ referred to TiO₂).

2. Rutile titanium dioxide base material according to Claim 1, **characterised by** an aluminium content of 0.4 to 0.8% by weight, preferably 0.5 to 0.8% by weight (calculated as Al₂O₃ referred to TiO₂).

3. Rutile titanium dioxide base material according to Claim 1 or 2, **characterised by** a lithium content of 0.1 to 0.3% by weight (calculated as Li₂O referred to TiO₂).

4. Rutile titanium dioxide base material according to one or more of Claims 1 to 3, **characterised by** a photostability of at least 5, measured as the PbG₃ value.

5. Rutile titanium dioxide base material according to one or more of Claims 1 to 4, **characterised by** a relative scattering power of at least 80, particularly of at least 95, measured as the MAB HTS value.

6. Rutile titanium dioxide base material according to one or more of Claims 1 to 5, **characterised by** a grey tone of at least 3, measured as the MAB HSC value.

7. Rutile titanium dioxide base material according to one or more of Claims 1 to 6, **characterised by** an anatase content of up to 5% by weight, particularly up to 3% by weight.

8. Rutile titanium dioxide base material according to Claim 7, **characterised by** an anatase content of up to 2% by weight.

9. Rutile titanium dioxide base material according to one or more of Claims 1 to 8, **characterised by** a brightness of at least 96.4, measured as the DFC L* value.

10. Rutile titanium dioxide base material according to one or more of Claims 1 to 9, **characterised by** a white tone of up to 2.5, measured as the DFC b* value.

11. Method for manufacturing a rutile titanium dioxide base material according to one or more of Claims 1 to 10, **characterised in that**, during or after hydrolysis of a clarified titanium sulphate solution prior to calcination of the titanium oxyhydrate suspension or paste, not only 0.05 to 0.5% by weight, particularly 0.1 to 0.3% by weight, of a lithium compound (calculated as Li₂O referred to TiO₂) is added, but also more than 0.15 to 0.8% by weight , particularly 0.4 to 0.8% by weight and particularly preferably 0.5 to 0.8% by weight of an aluminium compound (calculated as Al₂O₃ referred to TiO₂).

12. Method according to Claim 11, **characterised in that** the rutile titanium dioxide base material is subjected to inorganic and/or organic post-treatment.

## Patentansprüche

1. Rutiltitandioxidgrundkörper **gekennzeichnet durch**
einen Lithiumanteil von 0,05 bis 0,5 Gew.-% (gerechnet als Li₂O bezogen auf TiO₂) und einen Aluminiumanteil von mehr als 0,15 bis 0,8 Gew.-% (gerechnet als Al₂O₃ bezogen auf TiO₂).

2. Rutiltitandioxidgrundkörper nach Anspruch 1 **gekennzeichnet durch**
einen Aluminiumanteil von 0,4 bis 0,8 Gew.-% bevorzugt 0,5 bis 0,8 Gew.-% (gerechnet als Al₂O₃ bezogen auf TiO₂).

3. Rutiltitandioxidgrundkörper nach Anspruch 1 oder 2 **gekennzeichnet durch**
einen Lithiumanteil von 0,1 bis 0,3 Gew.-% (gerechnet als Li₂O bezogen auf TiO₂).

4. Rutiltitandioxidgrundkörper nach einem oder mehreren der Ansprüche 1 bis 3
**gekennzeichnet durch**
eine Photostabilität gemessen als PbG₃-Wert von wenigstens 5.

5. Rutiltitandioxidgrundkörper nach einem oder mehreren der Ansprüche 1 bis 4
**gekennzeichnet durch**
ein relatives Streuvermögen gemessen als MAB HTS-Wert von wenigstens 80, insbesondere wenigstens 95.

6. Rutiltitandioxidgrundkörper nach einem oder mehreren der Ansprüche 1 bis 5
**gekennzeichnet durch**
einen Farbstich gemessen als MAB HSC-Wert von wenigstens 3.

7. Rutiltitandioxidgrundkörper nach einem oder mehreren der Ansprüche 1 bis 6
**gekennzeichnet durch**
einen Anatasgehalt von bis zu 5 Gew.-%, insbesondere bis zu 3 Gew.-%.

8. Rutiltitandioxidgrundkörper nach Anspruch 7, **gekennzeichnet durch** einen Anatasgehalt von bis zu 2 Gew.-%.

9. Rutiltitandioxidgrundkörper nach einem oder mehreren der Ansprüche 1 bis 8
**gekennzeichnet durch**
eine Helligkeit gemessen als DFC L*-Wert von wenigstens 96,4.

10. Rutiltitandioxidgrundkörper nach einem oder mehreren der Ansprüche 1 bis 9
**gekennzeichnet durch**
einen Farbstich in Weiß gemessen als DFC b*-Wert von bis zu 2,5.

11. Verfahren zur Herstellung eines Rutiltitandioxidgrundkörpers nach einem oder mehreren der Ansprüche 1 bis 10, **dadurch gekennzeichnet,**
**dass** während oder nach der Hydrolyse einer geklärten Titansulfatlösung vor der Kalzinierung der Titandioxidhydratsuspension oder -paste nicht nur 0,05 bis 0,5 Gew.-% insbesondere 0,1 bis 0,3 Gew.-% einer Lithiumverbindung (gerechnet als Li₂O bezogen auf TiO₂) zugesetzt wird, sondern auch mehr als 0,15 bis 0,8 Gew.-% , insbesondere 0,4 bis 0,8 Gew.-% und besonders bevorzugt 0,5 bis 0,8 Gew.-% einer Aluminiumverbindung (gerechnet als Al₂O₃ bezogen auf TiO₂).

12. Verfahren nach Anspruch 11, **dadurch gekennzeichnet,**
**dass** der Rutiltitandioxidgrundkörper anorganisch und/oder organisch nachbehandelt wird.

## Revendications

1. Dioxyde de titane rutile comme matière de base, **caractérisé par** une teneur en lithium de 0.05% à 0.5% en poids (calculée en tant que Li₂O par rapport au TiO₂) et une teneur en aluminium de plus de 0.15 à 0.8% en poids (calculée en tant que Al₂O₃ par rapport au TiO₂).

2. Dioxyde de titane rutile comme matière de base conformément à la revendication 1, **caractérisé par** une teneur en aluminium de 0.4 à 0.8% en poids, de préférence 0.5 à 0.8% en poids (calculée en tant que Al₂O₃ par rapport au TiO₂).

3. Dioxyde de titane rutile comme matière de base conformément à la revendication 1 ou 2, **caractérisé par** une teneur en lithium de 0.1 à 0.3% en poids (calculée en tant que Li₂O par rapport au TiO₂).

4. Dioxyde de titane rutile comme matière de base conformément à une ou plusieurs des revendications 1 à 3, **caractérisé par** une photostabilité d'au moins 5, mesurée en tant que valeur PbG₃.

5. Dioxyde de titane rutile comme matière de base conformément à une ou plusieurs des revendications 1 à 4, **caractérisé par** un pouvoir éclaircissant relatif d'au moins 80, en particulier d'au moins 95, mesuré en tant que valeur MAB HTS.

6. Dioxyde de titane rutile comme matière de base conformément à une ou plusieurs des revendications 1 à 5, **caractérisé par** un sous-ton en gris d'au moins 3, mesuré en tant que valeur MAB HSC.

7. Dioxyde de titane rutile comme matière de base conformément à une ou plusieurs des revendications 1 à 6, **caractérisé par** une teneur en anatase inférieure à 5% en poids, en particulier inférieure à 3% en poids.

8. Dioxyde de titane rutile comme matière de base conformément à la revendication 7, **caractérisé par** une teneur en anatase inférieure à 2% en poids.

9. Dioxyde de titane rutile comme matière de base conformément à une ou plusieurs des revendications 1 à 8, **caractérisé par** une luminosité d'au moins 96.4, mesurée en tant que valeur DFC L*.

10. Dioxyde de titane rutile comme matière de base conformément à une ou plusieurs des revendications 1 à 9, **caractérisé par** un sous-ton en blanc inférieure à 2.5, mesuré en tant que valeur DFC b*.

11. Méthode de fabrication d'un dioxyde de titane rutile comme matière de base conformément à une ou plusieurs des revendications 1 à 10, **caractérisée par le fait que** pendant ou après l'hydrolyse d'une solution de sulfate de titane clarifiée précédant la calcination de la suspension ou pâte d'oxyhydrate de titane, on ajoute non seulement un composé de lithium (calculé en tant que Li₂O par rapport au TiO₂) à raison de 0.05 à 0.5% en poids, en particulier 0.1 à 0.3% en poids, mais aussi un composé d'aluminium (calculé en tant que Al₂O₃ par rapport au TiO₂) à raison de plus de 0.15 à 0.8% en poids, en particulier 0.4 à 0.8% en poids et en particulier de préférence 0.5 à 0.8% en poids.

12. Méthode conformément à la revendication 11, **caractérisée par le fait que** le dioxyde de titane rutile comme matière de base est soumis à un post-traitement inorganique et/ou organique.
